(19) **Europäisches Patentamt**

**European Patent Office**

**Office européen des brevets**

(11) **EP 0 683 383 B1**

(12) **EUROPEAN PATENT SPECIFICATION**

(45) Date of publication and mention of the grant of the patent:
**04.08.1999 Bulletin 1999/31**

(51) Int Cl.⁶: **G01F 23/00**, G01F 23/30

(21) Application number: **95107112.5**

(22) Date of filing: **11.05.1995**

(54) **A damper circuit for a device for indicating the level of a liquid in a tank, particularly for motor vehicles**

Dämpfungsschaltung für eine Einrichtung zur Anzeige des Niveaus einer Flüssigkeit in einem Tank, insbesondere für Kraftfahrzeuge

Circuit amortisseur pour un dispositif d'indication du niveau de liquide dans un réservoir, en particulier pour des véhicules à moteur

(84) Designated Contracting States:
**DE ES FR GB SE**

(30) Priority: **17.05.1994 IT TO940396**

(43) Date of publication of application:
**22.11.1995 Bulletin 1995/47**

(73) Proprietor: **FIAT AUTO S.p.A.**
**10135 Torino (IT)**

(72) Inventor: **Di Nunzio, Vittorio**
**I-10139 Torino (IT)**

(74) Representative: **Serra, Francesco et al**
**c/o JACOBACCI & PERANI S.p.A.**
**Corso Regio Parco, 27**
**10152 Torino (IT)**

(56) References cited:
**EP-A- 0 167 674**      **EP-A- 0 399 678**
**EP-A- 0 618 427**      **DE-A- 3 409 258**
**GB-A- 2 116 721**      **US-A- 4 991 435**

- **PATENT ABSTRACTS OF JAPAN vol. 9 no. 113 (P-356) [1836], 17 May 1985 & JP-A-60 000331 (HITACHI) 5 January 1985,**

**Description**

The present invention relates to a damper circuit for a device for indicating the level of a liquid in a tank, for example the fuel level in a motor vehicle tank.

More specifically the subject of the invention is a damper circuit usable in connection with a device comprising an indicator instrument or the like the input of which is connected to the output of an electric level sensor similar to a resistor having an electrical resistance which varies as a function of the level of the liquid.

Devices used to indicate the level of fuel in a motor vehicle tank include an indicator instrument, typically a moving coil, and an associated sensor or transducer, typically of the floating type.

Due to the movements experienced during motion of the motor vehicle the level of the fuel is subjected to sharp variations which cause corresponding movements and oscillations of the needle of the indicator instrument.

To remedy this disadvantage damper circuits have been proposed which are constituted essentially by a low pass filter interposed between the sensor or transducer and the indicator instrument.

This type of solution has various disadvantages.

In the first place, following the introduction of the damper circuit there is a reduced possibility of compensation between the sensor and the indicator instrument with variation in the supply voltage or temperature.

Moreover, in conditions of static equilibrium there cannot be an exact correspondence between the position of the needle of the indicator instrument and the effective level of liquid in the tank.

This type of defect can be corrected only by performing a specific calibration of the individual damper circuit in relation to the assembly of transducer and indicator instrument between which it is to be interposed.

The interposition of the damper circuit between the sensor and the indicator instrument can result in the indicator instrument not reproducing faithfully the characteristic of the sensor.

When the interposed damper circuit includes active electronic components, which can be subject to drift, offset or other leakages, measurement errors can arise which are difficult to compensate in an unequivocal manner in mass production.

Finally, the capacities in the damper circuit, for the definition of the damping time constant, can give rise to errors due to current leakage effects.

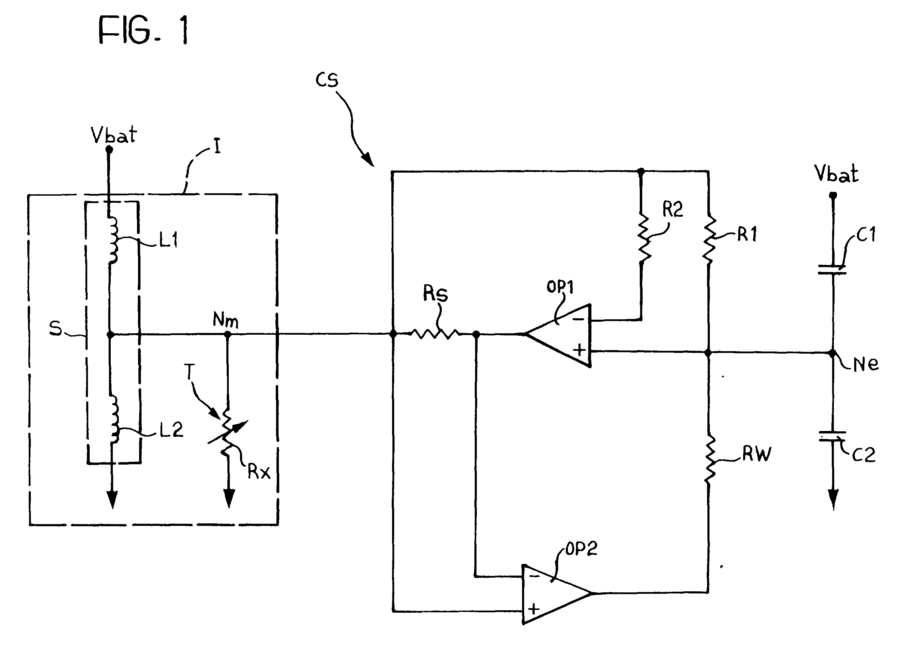

In European Patent Application No. EP-A-0 618 427 published 5.10.1994, in the name of the same applicant there has been proposed a damper circuit as shown in Figure 1 in which the reference numeral 1 generally indicates an indicator device for indicating the level of the liquid in a tank, of type known per se. This device substantially comprises an indicator instrument S schematically shown as two inductances L1, L2 connected between a DC voltage source Vbat and ground, and an electric sensor or transducer T for detecting the liquid level. The sensor or transducer T is in particular of a type like a resistor having an electrical resistance Rx which is variable in dependence on the liquid level. The variable resistor Rx is connected between ground and a node Nm representing the input of the indicator instrument S. To the node Nm is connected the output of a damper circuit according to the invention, generally indicated CS.

The damper circuit CS essentially comprises an operational amplifier OP1 the output of which is coupled to the node Nm via a resistor Rs. The non-inverting input (+) and inverting input (-) of OP1 are connected to the node Nm via resistors R1 and R2.

The non-inverting input (+) of OP1 is, moreover, connected to a node Ne constituting the junction between two capacitors C1 and C2 disposed between the voltage source Vbat and ground.

The voltage source Vbat is constituted, for example, by the battery of a motor vehicle.

The above-described circuit arrangement is such that the amplifier OP1 behaves substantially as a voltage-controlled generator. In operation it provides at its output a substantially zero current when the potential difference between the nodes Nm and Ne is substantially zero. This situation corresponds to a stationary condition of the liquid level in the tank. When a variation in the level of liquid in the tank occurs, a variation of Rx, and therefore of the potential of the node Nm occurs. This variation is instantaneously conveyed to the inverting input of OP1 via the resistor R2 and tends further to influence the potential of the node Ne (and therefore the potential at the non-inverting input of OP1) via the resistor R1. The variation in the potential of the node Ne is opposed, however, by the capacities C1 and C2 which, together with the resistor R1 (and the feedback circuit Rs, Rw, OP2, which will be discussed hereinbelow) determines the time constant of the damper circuit CS.

The voltage between the node Ne and ground tends to follow the variations of the voltage between the node Nm and ground, with this time constant.

Consequently, upon occurrence of a variation in the potential of Nm, a potential difference is created between the inputs of OP1 which causes a current to flow in the resistor Rs (connected between its output and Nm) the sign and magnitude of which depend on the sign and magnitude of the said potential difference. This current tends to resist the variations in the voltage between the node Nm and ground. The magnitude of this current reduces gradually as the potential of the node Ne equalises to the potential of the node Nm. The damper circuit CS therefore acts as a current adder/subtractor at the node Nm damping the signal variations applied to the input of the indicator instrument S and causing a slow variation in the position of its needle.

Once the new equilibrium situation has been reached the potentials at the nodes Nm and Ne are again identical to one another, and the output current of the damper circuit CS is nil.

If the fuel level variation is not unidirectional, but is the result of a movement having a nil or almost nil mean oscillation value, the damper circuit CS intervenes by pumping in and subtracting current to and from the node Nm, with the result that the position of the needle of the indicator instrument S is maintained substantially unvaried.

The capacitors C1 and C2 conveniently have very high values and it is therefore possible that, due to the effect of thermal variations or ageing phenomena of the dielectric of these capacitors, they may have parasitic resistances which are not negligible and which give rise to leakage currents.

In order at least partly to remedy the disadvantages due to the leakage currents of the said capacitors a further operational amplifier OP2 is provided, operating as a comparator with its inputs connected across the terminals of the resistor Rs and its output connected to the non-inverting input of OP1 via a resistor Rw. In the case of leakage currents due to C1 or C2 the potential of the node Ne would tend to become modified (inappropriately) with respect to the potential of the node Nm, thus causing a consequent unwarranted intervention of the damper circuit CS. This event leads to a potential difference across the terminals of Rs of a sign such as to cause the controlled and modulated insertion of Rw for the purpose of nullifying the effects of a leakage resistance of value similar to that of Rw. Since this directly influences the node Ne outside the law responsible for the normal damping action, it results that this effect is weakened inversely of the value of Rw and therefore this operative limit fixes the maximum leakage value which can be compensated.

Although the operation of the damper device just described was satisfactory, the applicant has established that the damping effect is high when the tank has little fuel in it, whilst the damping effect is gradually reduced as the tank becomes more full. In practice, with the said device, the damping effect is high when the needle of the level indicator instrument lies between 0/4 and 2/4, is low when the needle is between 2/4 and 3/4, and is practically nil when the needle is close to 4/4, this being substantially due to the limited capacity of the operational amplifier OP1 to provide or absorb current, which for the types commercially available is of the order of 10 ÷ 20 mA. If therefore the said capacity is sufficiently adapted to high values of Rx it becomes insufficient for values of Rx close to zero.

The object of the present invention is to provide a damper circuit for a device for indicating the level of a liquid in a tank, particularly for motor vehicles, which overcomes the said disadvantages, is easy to construct and of low cost.

According to the invention this object is achieved with a damper circuit having the characteristics defined in the attached claims.

Further characteristics and advantages of the invention will become apparent from the following detailed description given with reference to the attached drawings and provided purely by way of non-limitative example, in which:

> Figure 1 (already described) shows the circuit diagram of a prior art damper circuit;
> Figure 2 represents a circuit diagram relating to the damper circuit according to the invention;
> Figures from 3 to 6 represent circuit implementations of the circuit of Figure 2; and
> Figure 7 represents the circuit diagram of Figures 2 to 6 integrated in a single component.

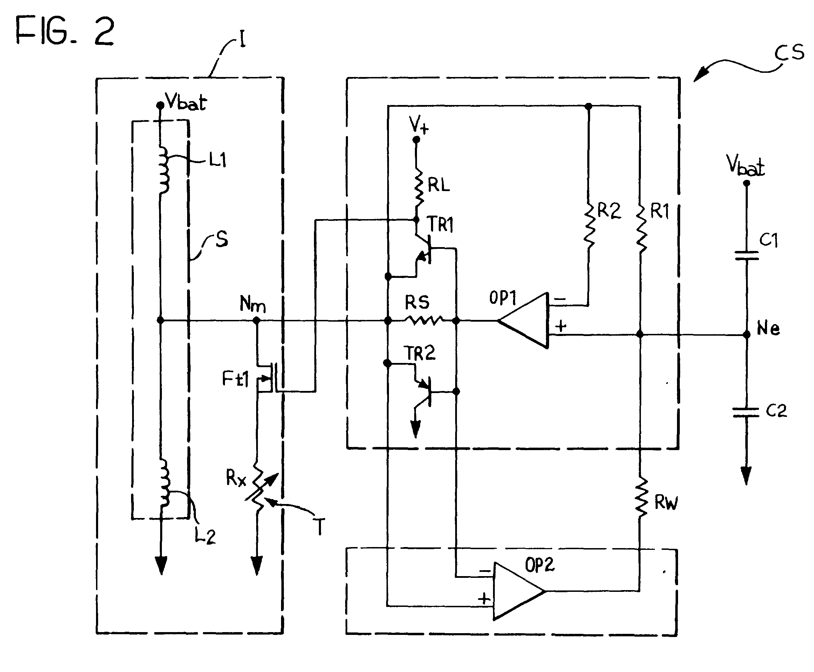

Referring to Figure 2, in which the same or similar elements to those previously described with reference to Figure 1 are indicated with the same reference symbols, a transistor Ft1 of N channel type is connected between the output Nm of the level sensor S and the electric level sensor T.

A resistor RL connected at one end to the positive supply pole is connected at the other end to the control electrode of the transistor Ft1 and the collector of a transistor TR1, for example of npn type, the emitter of which is connected to the output Nm of the level sensor S and to the emitter of a transistor TR2 for example of pnp type the collector of which is connected to ground, the bases of the said transistors TR1 and TR2 being connected to the output of the operational circuit OP1. As can be seen from the figure the bases of the transistors TR1 and TR2 are also connected to the inverting input of the operational amplifier OP2 whilst the emitters of the transistors TR1 and TR2 are connected to the non-inverting input of the operational amplifier OP2.

The operation of the circuit illustrated in Figure 2 is as follows:

In stationary conditions the system is inert and the instrument S indicates what is measured by the sensor T.

The transistor TR1 is turned off since the condition of the collector is such as to activate the control electrode of the field-effect transistor Ft1 which is closed, allowing the passage of current from the node Nm towards ground through the resistor Rx.

The channel resistance of Ft1 is such as to be negligible, when Ft1 is closed, in relation to the value of the resistor Rx.

The potential of Ne is, except for a negligible error due to possible leakages of real components, the same as Nm.

Upon variation in the level of fuel there is a variation of Rx and therefore of the voltage of the node Nm; this variation is conveyed instantaneously to the inverting input of the operational amplifier OP1 by the resistor R2 whilst at the non-inverting input connected by the resistor R1, or rather to the node Ne, this variation is resisted by the capacity of the capacitors C1 and C2; the output of the operational amplifier OP1 therefore varies instantaneously and in an opposite manner; it therefore tends to force the potential of the node Nm in such a way as to nullify the variation; the effect at the instrument S is immobility of the needle.

The attempt to force the node Nm by the output of the operational amplifier OP1 causes a flow of current through the resistor Rs and therefore the creation of a potential difference across its terminals which, in turn, determines the field of operation of the device CS; in fact, for small variations of the float there will be small currents through the resistor Rs.

As long as the potential difference across the terminals of Rs is smaller than the junction threshold $V\gamma$ of one of the two transistors TR1 or TR2 the operational amplifier OP1 has to subtract or supply current to the node Nm. The limit on the magnitude of this current is given only by physical limits of the operational amplifier employed, normally not more than ten or so milliamperes are delivered or absorbed.

Variations of significant magnitude, or anyway which get into the band of Rx which tends to zero, imply currents of the order of a hundred or so milliamperes, outside the range of good operation of a normal operational amplifier.

To overcome this disadvantage a push-pull amplifier circuit constituted by transistors TR1 of npn type, TR2 of pnp type and load resistor RL has been adopted, the intervention of which takes place only when the magnitude of the current required is such as to cause a potential difference across the terminals of the resistor Rs such as to exceed $V\gamma$ of one of the two transistors. Whichever of TR1 or TR2 goes into conduction determines, since they are of opposite types, the sense of the current flowing through the resistor Rs.

Large variations which cause current deliveries imply the intervention of the transistor TR1 which tends towards saturation; in this condition the potential of its collector falls significantly, influencing the control electrode of the field-effect transistor Ft1 which tends, from a situation of full conduction, to lower its conductivity or rather increase the overall resistance offered by the series of resistances Rx and the channel of Ft1. A drastic reduction in the value of Rx corresponds to a proportional increase in the resistance offered by the channel of Ft1 which, in fact tends to leave the potential of the node Nm and consequently the position of the needle of the instrument S unaltered.

The lack of balance in operation influences, as already mentioned, the node Ne the potential of which tends to reach that of Nm.

The capacitors C1 and C2 charge or discharge following their characteristic laws according to the nature of the variation, through the resistances R1 and Rw. The physical values of R1 and Rw and that of the capacities of the two capacitors C1 and C2 determine the time constant with which the node Ne tends to realign itself with the node Nm, or rather the response time of the system; for this reason the damping of the needle is directly proportional to the above time constant. The comparator OP2 the output of which varies cyclically between the value of the positive battery voltage and earth with a duty cycle of 50% in stationary conditions, is activated sharply during the phase of non-equilibrium, positioning its output stably at the maximum or minimum value in relation to the direction of the current which flows in the resistor Rs and to the relative potential difference across its terminals.

Through the resistor Rw the output of the operational amplifier OP2 tends to influence the node Ne; its operation is that of compensating possible parametric leakages of capacitors C1 and C2 due to leakage or offset of the operational amplifier OP1.

If, given the technological limits, one of the two capacitors C1 or C2 should be subject to drift or leakage the node Ne would be out of balance in the absence of variations of the value of Rx; this lack of equilibrium affects OP1 which tends to force the potential of the node Nm making a current flow through the resistance Rs.

The potential difference which activates the operational amplifier OP2, which corrects the accompanying event in the node Ne tending to nullify it; the physical value of the resistance Rw fixes the minimum limit of the equivalent parasitic resistance possibly present across the terminals of the capacitor C1 or C2 which can still be compensated by the system.

The intervention of the operational amplifier OP2 in the presence of a leakage, whilst causing an anomalous intervention at the node Ne which converts into a reduction of the time constant, or rather a modest reduction in the damping effect, however does allow a correction which is to the advantage of the precision of the system.

By means of the use of a few other components (not illustrated, but within the range of the average technician) the above function is utilised to speed up the movement of the needle only for the passage from the indication of the tank empty to tank full; this is useful if upon filling of the tank at a service station the instrument panel is switched on; in this case the driver has the visual perception of the introduction of the fuel.

The capacitor C1 is not strictly necessary to achieve the damping effect, its function is in effect to compensate, neutralising the possible potential variations of the supply voltage due to switching on and switching off of particularly significant users (loads), for example the heated window, conveying to the node Ne a proportion equal to the ratio

$$\frac{C_1}{C_1 + C_2}$$

of this possible variation.

Otherwise, supply variations transferred only to the node Nm, directly connected via a winding of the instrument S, would be equivalent to variations of the value of Rx and treated as such.

Once the non-equilibrium phase is terminated and the new stable position reached the potentials of the node Nm and Ne are identical and the system returns to a stationary state.

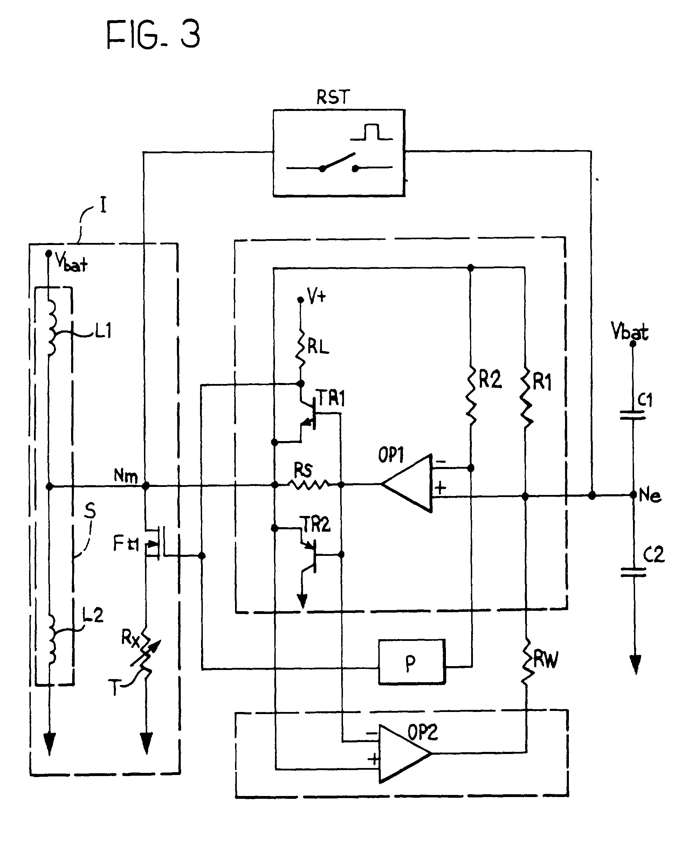

Referring now to Figure 3, which shows in part the circuit of Figure 2, there are seen two additional blocks respectively RST and P, the circuit RST being introduced between the nodes Ne and Nm and the block indicated P being connected to the inverting input of the operational circuit OP1 and the control electrode of the field-effect transistor Ft1.

The block RST provides for the initialisation of the system and the first acquisition upon insertion of the starting key, conveying to the node Ne the same potential as the node Nm. The block P provides for the active protection of the circuit in comparison with forces coming from outside, such as for example incorrect connections of the node Nm to ground or to the positive supply voltage, in this way safeguarding both the circuitry itself (preventing delivery/absorption of current by OP1, TR1, TR2) and the float represented by Rx (raising the resistance of the channel of Ft1).

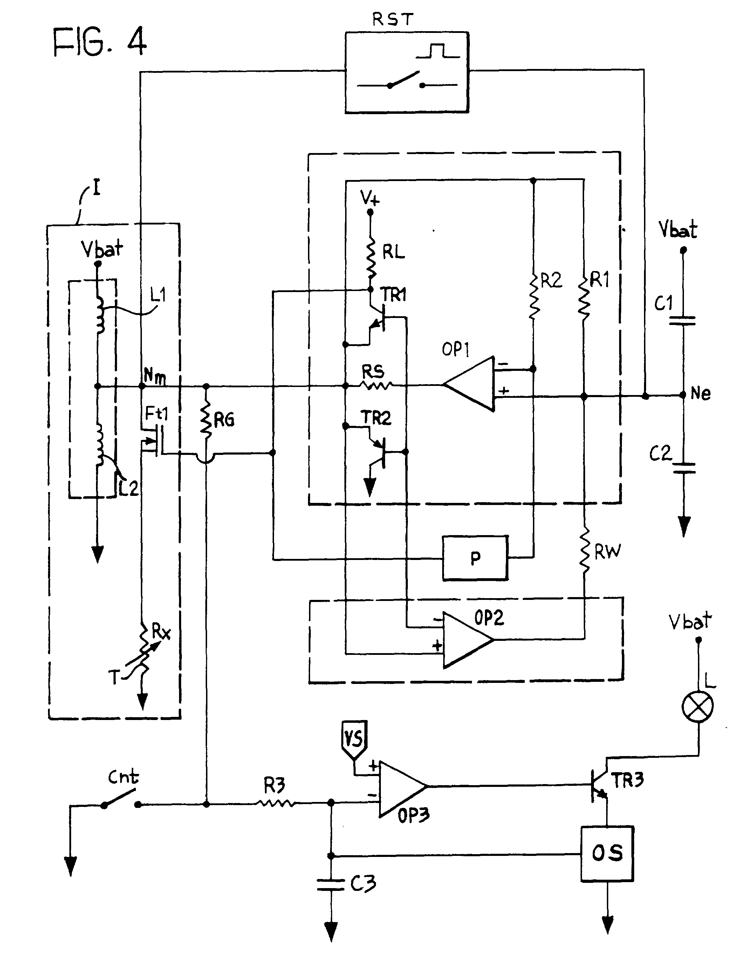

We now describe Figures 4 to 6 in which the same elements as those described with reference to Figure 3 are indicated with the same reference symbols adopted in this figure. Figure 4 relates to the circuitry arrranged for signalling to the driver by optical means such as LED or lamps of a predetermined value of Rx relating to the presence of a determined quantity of fuel in the tank, typically called the reserve. The floats usually perform this function by means of a contact Cnt which closes at a determined point in the movement of the float. The signals from the contact Cnt mentioned above are conveyed to an RC network (R3 and C3) and, via a resistance Rg connected to the point Nm, the float signal; the output of the RC network is supplied to a first input of a comparator stage OP3 to the second input of which is presented a reference threshold Vs. The output of the comparator OP3 intervenes at the base of a transistor TR3 the collector of which is connected to the reserve indicator lamp L connected to the battery voltage.

The emitter of the transistor TR3 is connected to a current-sensitive unit OS, in turn connected to ground, the terminal of the capacitor C3 connected to the first input of the comparator OP3 is also connected to the unit OS, whilst the other terminal is connected to ground.

In use, when the voltage across the capacitor C3 reaches the predetermined threshold Vs the transistor TR3 is saturated and the lamp illuminates. The time constant given by R3 and C3 determines the response time of the system, or rather the damping to which the reserve warning lamp ignition function is subjected assisted by the contact Cnt.

Whenever a float is utilised which is not provided with a reserve-indicating contact, it is the practice to use circuitry which processes the electrical signal present at the node Nm and provide for illumination of the indicator lamp; this device is commonly defined as an electronic reserve.

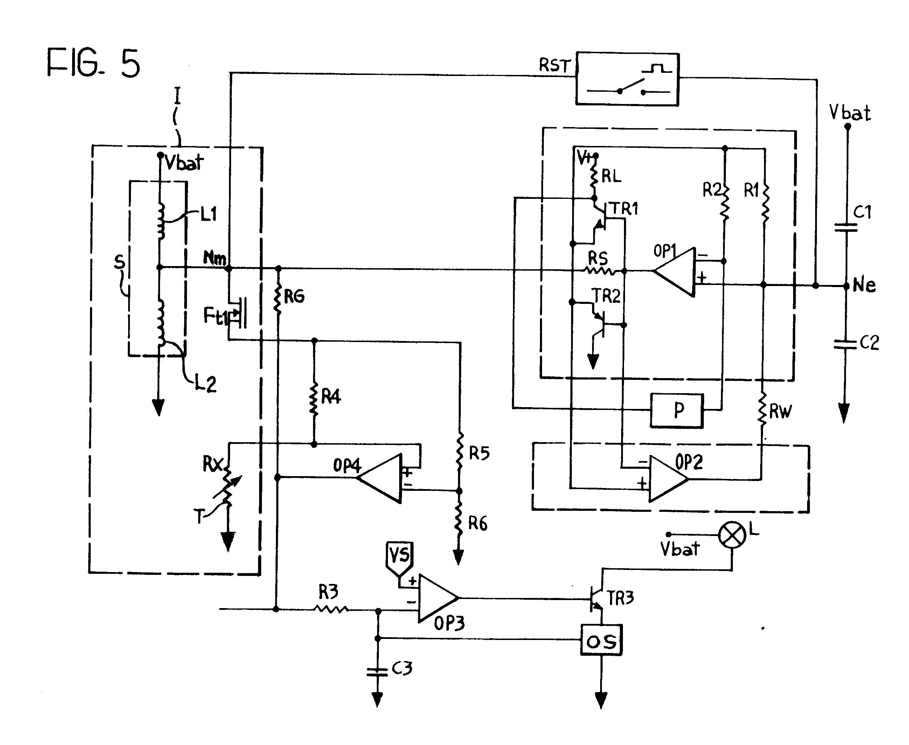

Referring to Figure 5 where the same elements as those described with reference to Figure 4 are indicated with the same reference symbols adopted in this Figure, a resistance R4 of a few ohms which has no influence with respect to the overall resistance is positioned in series with the channel of the field effect transistor Ft1 and the resistor Rx; two resistors R5 and R6 in series with one another and in parallel with the series formed by the resistances R4 and Rx complete the quadrilateral which constitutes a measuring bridge.

The central point of the series of resistors R4 and Rx and that of the series R5 and R6 leads to a comparator OP4 the output of which will be activated at a certain value of the voltage of the node Nm connected via the channel of the field-effect transistor Ft1, that is at a certain level of fuel in the tank.

The output of the comparator constituted by the operational amplifier OP4 is connected to the resistor R3; the following operation of the circuit has already been described during the course of the description of Figure 4.

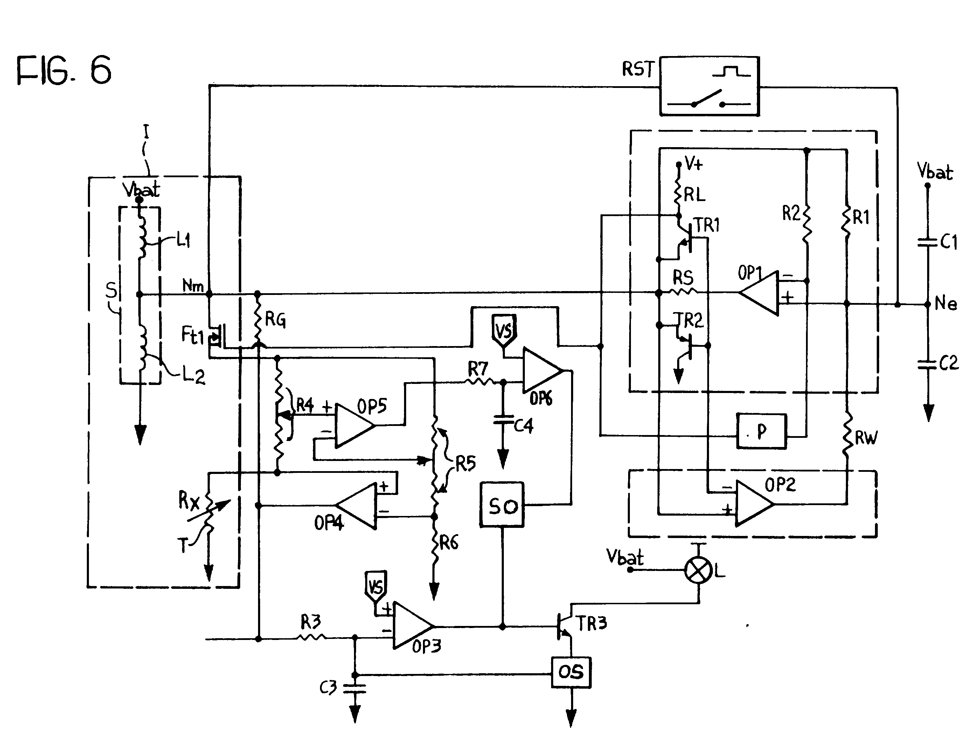

Whenever it is desired to indicate the presence in the tank of a quantity of fuel less than that identified by the reserve threshold, that is to say if it is desired to indicate that the fuel present in the tank is at a level such that a starting of the propulsion motor cannot take place and possible prolonged activation can cause damage to the electrical ignition and starting equipment, recourse can be had to a circuit such as that illustrated in Figure 6 in which the resistances R4 and R5 of Figure 5 are split and provided with cursors thereby constituting in practice voltage dividers; in Figure 6 the mid point of the resistor R4 is connected to a first input of a comparator OP5, whilst the mid point of the resistor R5 is connected to its second input, the same elements as those already described with reference to Figure 5 being indicated with the same reference symbols adopted in this Figure. The output of the operational circuit OP5 is connected to an RC network (R7 and C4) followed in turn by a comparator stage OP6. When the charge on the capacitor C4 reaches a predetermined threshold Vs the comparator OP6 is commuted, the oscillator stage SO is activated which acts on the base of the transistor TR3 modulating it and causing the illumination of the lamp L. Such indication is a supplementary alarm warning which demands immediate introduction of fuel into the tank. It is evident that by varying the voltage division by the pair of resistors R4 and R5 the level of fuel at which the lamp L starts to be illuminated is consequently varied.

From what has been described the advantages of the damper circuit according to the invention emerge clearly; the characteristic curve of the float remains unaltered, interactions and compensations typical of the float type instrument remain unchanged, it can be adapted to any pre-existing system without modifying the characteristics and without the need for float/instrument pairs to be calibrated or there being any need to calibrate the electronics, it conserves the power of the damper, even with floats devoid of mechanical damping, for all the positions which can be assumed thereby and for any magnitude of variation, it permits corrections against battery voltage variations for the purpose of minimising the influence of the connection and disconnection of very large loads.

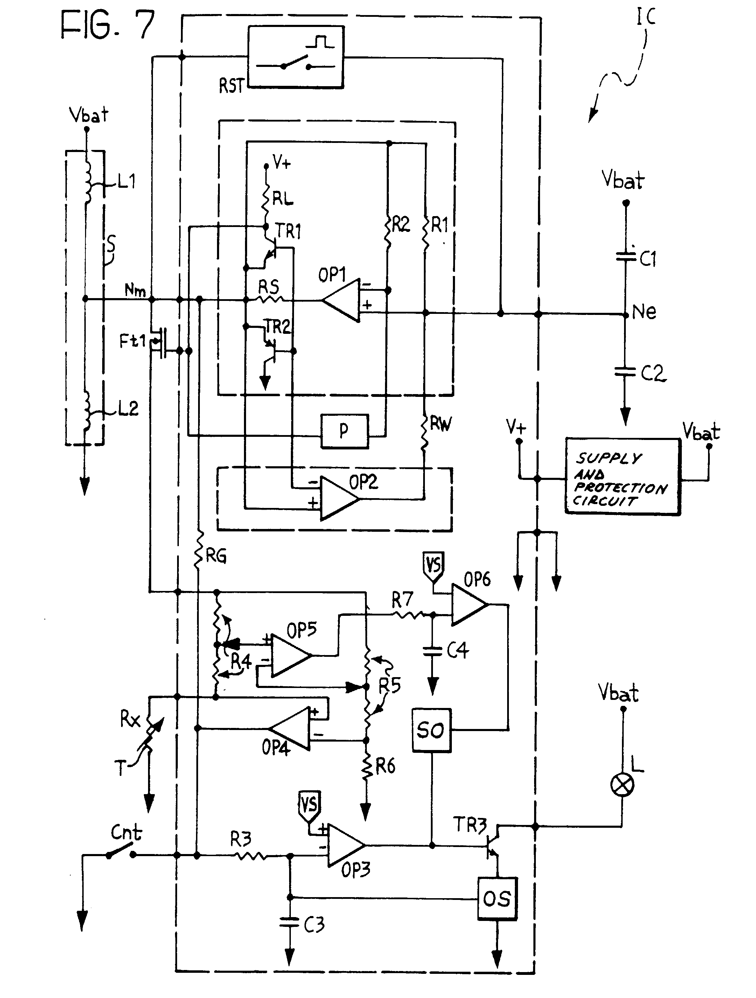

Other advantages are the parallel connection, that is to say to the measuring node, without interruption of the transducer-instrument series, being able to assume that in conditions of equilibrium the resistances of R4 and of the channel ON of Ft1 are negligible, thus guaranteeing not to introduce additional errors; it permits compensation of the drift of active components and leakage of passive components; it has the function of protection of short circuits and safeguarding the circuitry and the float; it permits activation of an indicator indicating a predetermined fuel level ("reserve"), at choice according to the motor vehicle installation, or servo assisting the specific contact of the float, if existing, or by processing the signals within the electronic circuitry; it permits activation of a warning indicator indicating the minimum level of fuel, lower than that mentioned above, below which it is not suitable to attempt starting because of the potential deterioration of some of the components of the engine, and is a circuit offering reproducibility, and which is suitable for engineering and miniaturisation for the purpose of embedding the circuitry in a single chip as visible by way of example and indicated IC in Figure 7.

Naturally, the principle of the invention remaining the same, the embodiments and details of construction can be widely varied with respect to what has been described and illustrated, without by this departing from the ambit of the present invention.

## Claims

1. A damper circuit (CS) for a device (L) for indicating the level of a liquid in a tank, particularly for a motor vehicle, the said device (L) comprising

   - an indicator instrument (S) or the like to the input of which is connected the output of an electric level sensor (T) in the form of a resistor Rx, having an electrical resistance variable as a function of the level of the liquid,
   - a first capacitor (C2) intended to be connected to the input (Nm) of the instrument (S) by means of a first resistor (R1);
   - a first operational amplifier (OP1) the inverting input and the output of which are intended to be connected to the input (Nm) of the instrument (S) by means of a second resistor (R2) and to a third resistor (Rs) respectively, and the non-inverting input of which is connected to the said first capacitor (C2); the first capacitor (C2) being connected between the non-inverting input of the said first operational amplifier (OP1) and ground;
   - a second capacitor (C1) being connected between the said first capacitor (C2) and a DC voltage source (Vbat), the terminals of the said third resistor (Rs) being connected to the inputs of a second operational amplifier (OP2) the output of which is connected to the non-inverting input of the first operational amplifier (OP1) via a fourth resistor (Rw),

   further characterised in that it includes an N-channel field-effect transistor (Ft1) connected between the input (Nm) of the instrument (S) and the electric level sensor (T),

   - a fifth resistor (RL) connected between a voltage source (V+) and the control electrode of the said field-effect transistor (Ft1),
   - a first and a second bi-polar transistor (TR1, TR2) of different types (npn, pnp) the emitter-base junctions of which are connected in parallel to the said third resistor (Rs) and the respective collectors of which are connected to the control electrode of the field-effect transistor (Ft1) and to ground respectively.

2. A circuit according to Claim 1, characterised in that it comprises a system initialisation circuit (RST) for the first acquisition of the starter-key-inserted signal, and a circuit (P) for the active protection of the circuit (CS) against external forces.

3. A circuit according to any preceding claim, characterised in that it includes a sixth resistor (Rg) connected at one end to the input (Nm) of the instrument (S) and at the other end to a seventh resistor (R3) to which the fuel reserve signal (Cnt) is applied, the other terminal of the said seventh resistor (R3) being connected to a first input of a first threshold comparator circuit (OP3) to the second input of which is delivered a threshold signal (Vs), the intermediate point between the said seventh resistor (R3) and the said first threshold comparator (OP3) being connected to a first terminal of a third capacitor (C3) the other terminal of which is connected to ground, the said intermediate point between the said seventh resistor (R3) and the said first threshold comparator (OP3) being connected to the output of a protection circuit (OS), the output of the said first threshold comparator (OP3) being connected to the base of a third transistor (TR3) the emitter of which is connected to the input of the circuit (OS), which is connected to ground, the collector of the said third transistor (TR3) being connected to an indicator element (L) connected to the positive pole of the battery.

4. A circuit according to claim 3, characterised in that it includes an eighth resistor (R4) connected at a first end to the channel of the said field-effect transistor (Ft1) and to a ninth resistor (R5) and a tenth resistor (R6) in series, the said tenth resistor (R6) being connected to ground; the second end of the said eighth resistor (R4) being connected to the said variable resistor (Rx) and to a first input of a first comparator circuit (OP4) the second input of which is connected to the intermediate point of the said ninth resistor (R5) and tenth resistor (R6), the output of the said first comparator (OP4) being connected to the said seventh resistor (R3).

5. A circuit according to claim 4, characterised in that the said eighth resistor (R4) is constituted by a voltage divider.

6. A circuit according to claim 4 and claim 5, characterised in that the said ninth resistor (R5) is constituted by a voltage divider.

7. A circuit according to any preceding claim, characterised in that it includes a second comparator circuit (OP5) the first input of which is connected to the mid point of the eighth resistor (R4), whilst its second input is connected to the mid point of the said ninth resistor (R5), the output of the said second comparator circuit (OP5) leading, via an eleventh resistor (R7), to a first input of the second threshold comparator (OP6) to the second input of which is applied a threshold signal (Vs); the connection point between the said eleventh resistor (R7) and the first input of the said second threshold comparator (OP6) being connected to a fourth capacitor (C4) which is connected to ground, the output of the said second threshold comparator (OP6) leading to an oscillator circuit (SO) the output of which is connected to the intermediate point between the output of the said first threshold comparator (OP3) and the base of the said third transistor (TR3).

8. A circuit according to any preceding claim, characterised in that it is integrated on a single chip (IC).

**Patentansprüche**

1. Dämpfungsstufe (CS) für eine Vorrichtung (L), um den Pegel einer Flüssigkeit in einem Behälter anzuzeigen, im besonderen für ein Kraftfahrzeug, wobei die Vorrichtung (L) enthält:

- ein Anzeigeinstrument (S) oder ähnliches, an dessen Eingang der Ausgang eines elektrischen Pegelgebers (T) in Form eines Widerstands Rx gelegt wird, der einen elektrischen Widerstand besitzt, der als Funktion des Pegels der Flüssigkeit veränderbar ist;
- einen ersten Kondensator (C2), der vorgesehen ist, um mit dem Eingang (Nm) des Instruments (S) über einen ersten Widerstand (R1) verbunden zu werden;
- einen ersten Operationsverstärker (OP1), dessen invertierender Eingang und dessen Ausgang über einen zweiten Widerstand (R2) so vorgesehen sind, um mit dem Eingang (Nm) des Instruments (S) bzw. mit einem dritten Widerstand (Rs) verbunden zu werden, und dessen nichtinvertierender Eingang am ersten Kondensator (C2) liegt; wobei der erste Kondensator (C2) zwischen dem nichtinvertierenden Eingang des ersten Operationsverstärkers (OP1) und Masse liegt;
- einen zweiten Kondensator (C1), der zwischen dem ersten Kondensator (C2) und einer Gleichspannungsquelle (Vbat) liegt, wobei die Anschlüsse des dritten Widerstands (Rs) mit den Eingängen eines zweiten Operationsverstärkers (OP2) verbunden sind, dessen Ausgang über einen vierten Widerstand (Rw) am nichtinvertierenden Eingang des ersten Operationsverstärkers (OP1) liegt,

weiters dadurch gekennzeichnet, dass die Vorrichtung einen N-Kanal Feldeffekttransistor (Ftl) aufweist, der zwischen dem Eingang (Nm) des Instruments (S) und dem elektrischen Pegelgeber (T) liegt,

- einen fünften Widerstand (RL) aufweist, der zwischen einer Spannungsquelle (V+) und der Steuerelektrode des Feldeffekttransistors (Ft1) liegt,
- einen ersten und einen zweiten bipolaren Transistor (TR1, TR2) mit unterschiedlicher Leitfähigkeit (npn, pnp) aufweist, deren Emitter/Basis-Strecken parallel zum dritten Widerstand (Rs) liegen und deren Kollektoren mit der Steuerelektrode des Feldeffekttransistors (Ftl) bzw. mit Masse verbunden sind.

2. Stufe gemäß Anspruch 1, dadurch gekennzeichnet, dass die Stufe einen Schaltkreis zum Hochfahren des Systems (RST), um das erste Signal beim Einstecken des Zündschlüssels zu erzeugen, sowie einen Schaltkreis (P) enthält, um die Stufe (CS) aktiv gegen externe Kräfte zu schützen.

3. Stufe gemäß irgendeinem der bisherigen Ansprüche, dadurch gekennzeichnet, dass die Stufe einen sechsten Widerstand (Rg) aufweist, der an einem Ende mit dem Eingang (Nm) des Instruments (S) verbunden ist und dessen anderes Ende an einem siebenten Widerstand (R3) liegt, an den das Kraftstoffreserve-Signal (Cnt) gelegt wird, wobei der andere Anschluss des siebenten Widerstands (R3) mit einem ersten Eingang einer ersten Schwellenwert-Vergleicherstufe (OP3) verbunden ist, an deren zweiten Eingang ein Schwellenwertsignal (Vs) gelegt wird, wobei der Verbindungspunkt zwischen dem siebenten Widerstand (R3) und der ersten Schwellenwert-Vergleicherstufe (OP3) mit einem ersten Anschluss eines dritten Kondensators (C3) verbunden ist, dessen anderer Anschluss an Masse liegt, wobei der Verbindungspunkt zwischen dem siebenten Widerstand (R3) und der ersten Schwellenwert-Vergleicherstufe (OP3) mit dem Ausgang eines Schutzschaltkreises (OS) verbunden ist, wobei der Ausgang der ersten Schwellenwert-Vergleicherstufe (OP3) an der Basis eines dritten Transistors (TR3) liegt, dessen Emitter mit dem Eingang des Schaltkreises (OS) verbunden ist, der an Masse liegt, wobei der Kollektor des dritten Transistors (TR3) mit einem Anzeigeelement (L) verbunden ist, das am positiven Pol der Batterie liegt.

4. Stufe gemäß Anspruch 3, dadurch gekennzeichnet, dass die Stufe einen achten Widerstand (R4) aufweist, der an einem ersten Ende mit dem Kanal des Feldeffekttransistors (Ftl) sowie mit einem neunten Widerstand (R5) und einem zehnten Widerstand (R6) verbunden ist, die in Serie geschaltet sind, wobei der zehnte Widerstand (R6) an Masse liegt; das zweite Ende des achten Widerstands (R4) mit dem veränderbaren Widerstand (Rx) sowie mit einem ersten Eingang einer ersten Vergleicherstufe (OP4) verbunden ist, deren zweiter Eingang am Verbindungspunkt des neunten Widerstands (R5) und des zehnten Widerstands (R6) liegt, wobei der Ausgang der ersten Vergleicherstufe (OP4) mit dem siebenten Widerstand (R3) verbunden ist.

5. Stufe gemäß Anspruch 4, dadurch gekennzeichnet, dass der achte Widerstand (R4) von einem Spannungsteiler gebildet wird.

6. Stufe gemäß Anspruch 4 und 5, dadurch gekennzeichnet, dass der neunte Widerstand (R5) von einem Spannungsteiler gebildet wird.

7. Stufe gemäß irgendeinem der bisherigen Ansprüche, dadurch gekennzeichnet, dass die Stufe eine zweite Vergleicherstufe (OP5) aufweist, deren erster Eingang mit dem Mittelpunkt des achten Widerstands (R4) verbunden ist, während ihr zweiter Eingang am Mittelpunkt des neunten Widerstands (R5) liegt, wobei der Ausgang der zweiten Vergleicherstufe (OP5) über einen elften Widerstand (R7) zu einem ersten Eingang der zweiten Schwellenwert-Vergleicherstufe (OP6) führt, deren zweiter Eingang an einem Schwellenwertsignal (Vs) liegt; der Verbindungspunkt zwischen dem elften Widerstand (R7) und dem ersten Eingang der zweiten Schwellenwert-Vergleicherstufe (OP6) mit einem vierten Kondensator (C4) verbunden ist, der an Masse liegt, wobei der Ausgang der zweiten Schwellenwert-Vergleicherstufe (OP6) zu einer Oszillatorstufe (SO) führt, deren Ausgang mit dem Verbindungspunkt zwischen dem Ausgang der ersten Schwellenwert-Vergleicherstufe (OP3) und der Basis des dritten Transistors (TR3) verbunden ist.

8. Stufe gemäß irgendeinem der bisherigen Ansprüche, dadurch gekennzeichnet, dass die Stufe auf einem einzigen Chip (IC) integriert ist.

## Revendications

1. Circuit d'amortissement (CS) pour un dispositif (L) destiné à indiquer le niveau d'un liquide dans un réservoir, en particulier pour un véhicule à moteur, ledit dispositif (L) comportant

- un instrument indicateur (S) ou équivalent à l'entrée duquel est reliée la sortie d'un capteur de niveau électrique (T) sous la forme d'une résistance Rx, ayant une variable de résistance électrique fonction du niveau du liquide,
- un premier condensateur (C2) prévu pour être relié à l'entrée (Nm) de l'instrument (S) au moyen d'une première résistance (R1);
- un premier amplificateur opérationnel (OP1) dont l'entrée inverseuse et la sortie sont prévues pour être reliées à l'entrée (Nm) de l'instrument (S) au moyen d'une deuxième résistance (R2) et à une troisième résistance (Rs) respectivement, et dont l'entrée non-inverseuse est reliée audit premier condensateur (C2); le premier condensateur (C2) étant relié entre l'entrée non-inverseuse dudit premier amplificateur opérationnel (OP1) et la masse;
- un deuxième condensateur (C1) étant relié entre ledit premier condensateur (C2) et une source de tension CC (Vbat), les bornes de ladite troisième résistance (Rs) étant reliées aux entrées d'un deuxième amplificateur opérationnel (OP2) dont la sortie est reliée à l'entrée non-inverseuse du premier amplificateur opérationnel (OP1) par l'intermédiaire d'une quatrième résistance (Rw),

caractérisé en outre en ce qu'il comprend un transistor à effet de champ de canal N (Ft1) relié entre l'entrée (Nm) de l'instrument (S) et le capteur de niveau électrique (T),

- une cinquième résistance (RL) reliée entre une source de tension (V+) et l'électrode de commande dudit transistor à effet de champ (Ft1),

- un premier et un deuxième transistor bipolaire (TR1, TR2) de différents types (npn, pnp) dont les jonctions émetteur-base sont reliées en parallèle à ladite troisième résistance (Rs) et dont les collecteurs respectifs sont reliés à l'électrode de commande du transistor à effet de champ (Ftl) et à la masse respectivement.

2. Circuit selon revendication 1, caractérisé en ce qu'il comporte un circuit d'initialisation de système (RST) pour la première acquisition du signal de clé de contact insérée, et un circuit (P) pour la protection active du circuit (CS) contre des forces externes.

3. Circuit selon l'une quelconque des revendications précédentes, caractérisé en ce qu'il comprend une sixième résistance (Rg) reliée à une extrémité à l'entrée (Nm) de l'instrument (S) et à l'autre extrémité à une septième résistance (R3) sur laquelle le signal de réserve de carburant (Cnt) est appliqué, l'autre borne de ladite septième résistance (R3) étant reliée à une première entrée d'un premier circuit de comparateur de seuil (OP3) sur la deuxième entrée duquel est délivré un signal de seuil (Vs), le point intermédiaire entre ladite septième résistance (R3) et ledit premier comparateur de seuil (OP3) étant relié à une première borne d'un troisième condensateur (C3) dont l'autre borne est reliée à la masse, ledit point intermédiaire entre ladite septième résistance (R3) et ledit premier comparateur de seuil (OP3) étant relié à la sortie d'un circuit de protection (OS), la sortie dudit premier comparateur de seuil (OP3) étant reliée à la base d'un troisième transistor (TR3) dont l'émetteur est relié à l'entrée du circuit (OS), qui est relié à la masse, le collecteur dudit troisième transistor (TR3) étant relié à un élément indicateur (L) relié au pôle positif de la batterie.

4. Circuit selon la revendication 3, caractérisé en ce qu'il comprend une huitième résistance (R4) reliée à une première extrémité au canal dudit transistor à effet de champ (Ft1) et à une neuvième résistance (R5) et une dixième résistance (R6) en série, ladite dixième résistance (R6) étant reliée à la masse; la deuxième extrémité de ladite huitième résistance (R4) étant reliée à ladite résistance variable (Rx) et à une première entrée d'un premier circuit comparateur (OP4) dont la deuxième entrée est reliée au point intermédiaire de ladite neuvième résistance (R5) et la dixième résistance (R6), la sortie dudit premier comparateur (OPA) étant reliée à ladite septième résistance (R3).

5. Circuit selon la revendication 4, caractérisé en ce que ladite huitième résistance (R4) est constituée par un diviseur de tension.

6. Circuit selon la revendication 4 et la revendication 5, caractérisé en ce que ladite neuvième résistance (R5) est constituée par un diviseur de tension.

7. Circuit selon l'une quelconque des revendications précédentes, caractérisé en ce qu'il comprend un deuxième circuit comparateur (OP5) dont la première entrée est reliée au point milieu de la huitième résistance (R4), tandis que sa deuxième entrée est reliée au point milieu de ladite neuvième résistance (R5), la sortie dudit deuxième circuit comparateur (OP5) conduisant, par l'intermédiaire d'une onzième résistance (R7), à une première entrée du deuxième comparateur de seuil (OP6) sur la deuxième entrée duquel est appliqué un signal de seuil (Vs); le point de connexion entre ladite onzième résistance (R7) et la première entrée dudit deuxième comparateur de seuil (OP6) étant relié à un quatrième condensateur (C4) qui est relié à la masse, la sortie dudit deuxième comparateur de seuil (OP6) conduisant à un circuit d'oscillateur (SO) dont la sortie est reliée au point intermédiaire entre la sortie dudit premier comparateur de seuil (OP3) et la base dudit troisième transistor (TR3).

8. Circuit selon l'une quelconque des revendications précédentes, caractérisé en ce qu'il est intégré sur une unique plaquette (IC).

FIG. 1

EP 0 683 383 B1

# FIG. 2

EP 0 683 383 B1

# FIG. 3

# FIG. 4

FIG. 5

# FIG. 6

EP 0 683 383 B1

# FIG. 7